Europäisches Patentamt

European Patent Office

Office européen des brevets

(11) Publication number: **0 453 601 A1**

# EUROPEAN PATENT APPLICATION

(21) Application number: 90107927.7

(22) Date of filing: 26.04.90

(51) Int. Cl.5: **B60Q 1/44**, B60Q 1/26

(43) Date of publication of application:
30.10.91 Bulletin 91/44

(84) Designated Contracting States:
DE ES FR GB IT SE

(71) Applicant: Chiou, Nan-Mu
No. 3, Alley 3, Lane 48, chin-chiang Street
Taipei(TW)

Applicant: Chiou, Yun-Perng
No. 3, Alley 3, Lane 48, chin-chiang Street
Taipei(TW)

(72) Inventor: Chiou, Nan-Mu
No. 3, Alley 3, Lane 48, chin-chiang Street
Taipei(TW)
Inventor: Chiou, Yun-Perng
No. 3, Alley 3, Lane 48, chin-chiang Street
Taipei(TW)

(74) Representative: von Puttkamer, Nikolaus,
Dipl.-Ing.
Pienzenauerstrasse 2
W-8000 München 80(DE)

(54) Car-operation-condition indicating apparatus.

(57) It is an apparatus to indicate a car operation condition, which comprises a plurality of red and green lights mounted on the head and tail portions of a car to inform or warn a rear car or a front car about the existing driving and operation condition of a mid-car. The mid part of a car head is mounted with a set of red and green lights; both sides of the car tail are mounted with two sets of red and green lights. The lights on the car head are used for warning the adjacent car or cars that this car is going to pass over a front car or to cross a road so as to prevent from collision. The lights on the car tail are used for warning the rear car to watch so as to prevent from impacting the front car.

FIG.1

The present invention relates to car indicate device of the type which for indicating operation condition.

As a result of the fast progress in technology,the car speed has been improved and increased considerably. In traffic accidents,50.9% are caused by collision between the rear and front cars;48.6% are made by a car itself;0.5% are caused by other causes. The traffic accidents take place during night time are four times higher than that of the day time,since the driver in a rear car does not only watch the tail lights of a front car;he (or she) has to watch many situations (such as the road condition,road signs,cars coming from the opposite direction ,and pedestrians).

From the conventional tail lights of a car,a driver in a rear is unable to know the possible operation condition of a front car at a short glance. The object of the present invention is to provide an apparatus, whereby the driver in a rear car can,at a short glance,understand the operation condition of a front cat,or a situation happened to a front car;then, the driver of a rear car can take necessary action in advance.

According to the present invention, the car-operation-condition indicating apparatus can provide five different indications by using three color lights;the five indications includes car reversing,stop,accelerating,car moving in neutral gear condition,and braking condition so as to warn a rear or front car to take necessary action accordingly in an easy manner with a view to minimize the possibility of causing an accichent.

In the present invention, an speed pulse generator kit is mounted on the speed detection system. The car-operation conditions are indicated with lights controlled by the switches for accelerator pedal,brake pedal,and the reversing light;each lamp in the various systems is connected, in series,with a LED,which is installed on the instrument panel so as to let a driver watch the various lamps if they are in normal operation condition. The headlights of a car can be operated selectively under an automatic turn-on/off system or a constant turn-on system so as to reduce the mental tension of the driver, to increase the serviceable life of the car battery,and to minimize the lead pollution in the air.

According to the present invention, the various car-operation conditions are indicated with five kinds of light signals,which are the same as the conventional traffic light signals;the five light signals are further described as follows:

(1).Reversing light:White light and red flasher are used to indicate reversing.The reversing lights would not be affected upon the driver operating the accelerator or the brake.

(2).Car-stop light:A red flasher is used to indicate a car stopped to run on a road;in that case,the car-stop light would not be affected upon the driver stepping on the accelerator or brake.

(3).Accelerator light:A green light is used to indicate the front car running forwards normally.

(4).Neutral gear moving light: A Green flasher is used to indicate the traffic situation ahead being indefinite or unclear;it is possible to put on a brake or to shift into a neutral gear condition.

(5).Brake light:A red light is used to indicate to put on a brake so as to slow down the car.

When a car mounted with the present in-vention runs on a road,the rear car of that car will,at a given distance,see clearly the operation condition of that car;in other words,the first front car is similar to a commander car,of which each of the operation conditions,such as accelerating,moving in neutral gear,braking,stop,and reversing will be shown to the rear cars immediately;the first front car may be considered as an observation post for the following rear cars.Naturally,the drivers in the rear cars would operate their cars in the same way;consequently,the traffic situation would be controlled smoothly;braking operation will be reduced;air pollution will be reduced,and safety in life and property will also be improved.Currently, when the tail light of a car is out of order,the driver thereof is unable to know immediately;the car is still running on road,and therefore the rear cars of that car would have a wrong judgment to the front car condition,and an accident might be resulted.For example,the brake lights of a current car have to be inspected by a person walking to the rear side of the car.

In view of the aforesaid drawbacks of a current car,the inventor has developed the present invention,a lamp inspection system;each lamp of a light signal system is connected in series with a LED, which is mounted on the instrument panel.Whenever a lamp is out of order, the corresponding LED will not give light;then,the driver will know immediately which lamp is out of order so as to replace with a new one. Since the headlights consume more power, the visibility of an opposite car might be affected. According to the present invention,the headlights of a car can be set in an automatic turn-on/off operation mode;a high beam or low beam light is to be set mannally.Under normal road condition,the automatic turn-on/off system in the car is used so as not to affect the visibility of a front car during the car being stopped;when the car moves forwards,the headlights are lit up;when the car stops,the headlights go out so as to have the battery had a longer serviceable life,and to reduce lead solution as well.The constant turn-on system may be used during supporting a friend who needs light,or during driving on a hazardous road to watch every movement.

According to the present invention,the indicator light (yellow flasher) is not changed,i.e., following the conventional way. The conventional out-of-order light operated manually is deemed be hind the time.for example,if a collision accident of two cars is happened on the modern free way,the drivers might have been injured seriously,being unable to move to turn on the out-of-order light or to pick up the triangle board out of the trunk to place it 50 meters away from the car;in that case,a rear car about three kilometers away might have dashed to the accident spot. It is very possible to have another collision accident, if the rear car driver has a wrong judgment; it does happen quite often. A car stopped suddenly on a road would cause a danger, since it becomes an unexpected obstacle. The present invention has particularly emphasized that a car stopped on a road would become a dangerous obstacle; therefore, the red flasher is used as an out-of-order or temporary stop signal according to the present invention.

A preferred embodiment of the present invention will now be described. By way of example inly, with reference to the accompanying diagrammatic drawings in which:

FIG.1 is a circuit diagram of a preferred embodiment according to the present invention.

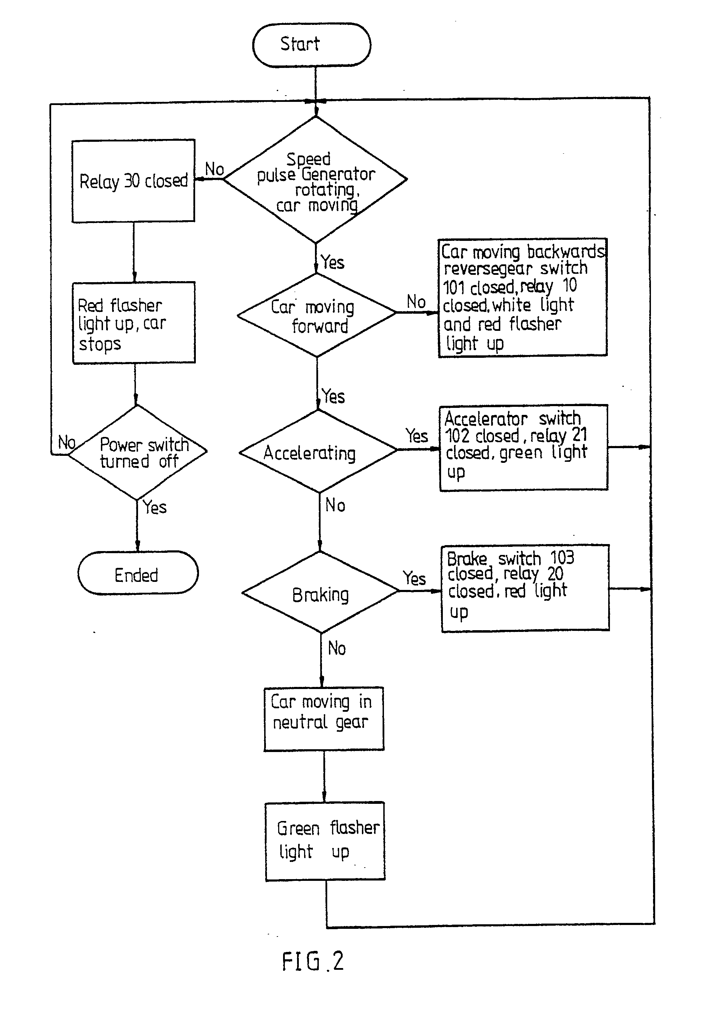

FIG.2 is a flow chart of the light-indicating system according to the present invention.

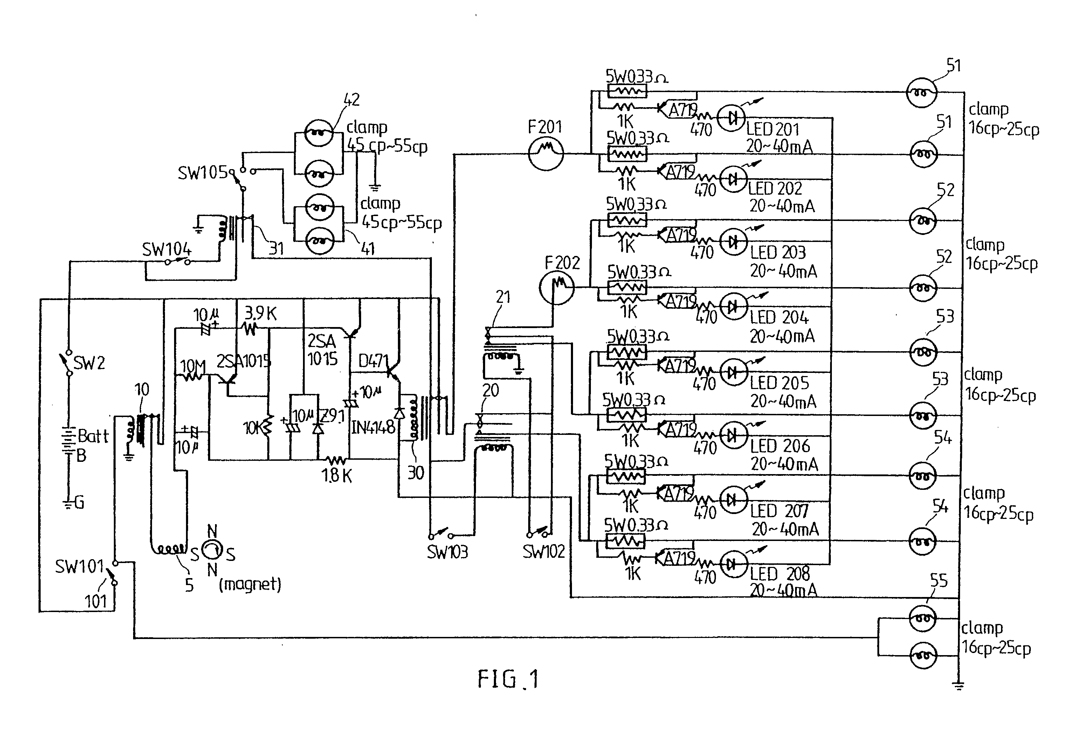

FIG.1 illustrates a circuit diagram of an embodiment of the present in-vention,of which the operation can be started by turning on a car battery.B switch SW2 with a key.

The headlight can selectively set at an automatic turn-on/off system or a constant turn-on system. The switch SW105 is a three-throw switch for controlling the headlight to provide a high beam light 41,a low beam light 42 and turning off.To operate the automatic turn-on system, turn on manual switch moves 104 IN OFF Condition to set relay 31 in normal close condition. When a car moves in neutral gear condition, an speed pulse Generator kit 5 in a speed detection system will rotate to energize relay 30 IN normal open Condition, which will supply power to relay 31 IN normal close so as to facilitate the three-throw switch SW105 to turn on the headlight automatically.

To operate the automatic turn-off system,stop an speed pulse Generator kit 5 when a car engine is stopped, the relay 30 will be in normal turn-off condition ,and the relay 31 will also be turned off to cut off the power for the three-throw switch SW105; naturally, the headlights will be turned off.

To operate the constant turn-on system of the headlights, turn on manual switch SW104 to energize relay 31 In normal open so as to have the three-throw switch SW105 set in a constant turn-on system.

The car-movement-detection system is operated as fallows: when the car stops, speed pulse Generator kit 5 mounted on the speed-detection tube does not rotate ; therefore,no power is generated; the relay 30 will be set in normal close condition. When the car moves in neutral gear condition, an speed pulse Generaton kit motor rotates to generate power to cause relay 30 to be closed. When the car moves in neutral gear condition or stops, speed pulse generator kit can detect the aforesaid conditions; in that case, the related switches would be actuated to indicate the car conditions. When the car moves reversely,speed puls generator will rotate reversely;the reversing switch SW101 will be closed to cause the relay 10 to be closed to cut off the signal from speed pulse generator kit; then, the relay 30 will be set in normal close condition,and a white light 55 and a red flasher 51(car reversing)will be shown.

When the car moves reversely,the reverse gear will cause the reverse gear switch SW101 to be turned on,and the relay 10 will be open. When the car moves reversely, an speed pulse Generator kit 5 will rotate. Since the relay 10 is opened, there is no signal to have the relay 30 opened,i.e.,the relay 30 is set in normal close condition to cause the red flasher 51 to be turned on. When the switch SW101 is turned on,the white light 55 will be lit up;in that case, if the accelerator switch SW102 or the brake switch SW103 is turned on,the aforesaid system will not be affected.

In parking condition, speed pulse generator kit 5 does not operate to generate power,and therefore the relay 30 is in normal close condition. The main power supply will pass through a bulb testing system and a flasher F201 to show a red flasher;in that case,if the accelerator switch SW102 or the brake switch SW103 is turned on,the aforesaid system will not be affected. When the car is moving,there are three operation conditions, i.e., moving without stepping on the accelerator, moving by stepping on the accelerator,and moving and stepping on the brake pedal;when the car moves,the relay 30 is in open condition.

(1).When the car is moving without stepping on the accelerator,the relay 20 is in normal close condition (the brake switch SW103 In OFF),and the relay 21 is in normal close condition (the accelerator switch SW102 IN OFF);the main power supply will pass through the bulb test system and the flasher F202 to show a green flasher 52,which indicates the car moves without stepping in the accelerator.

(2).When the car is moving by stepping on the accelerator,the relay 20 is in normal close condition (the brake switch SW103 IN OFF); When the driver steps on the accelerator pedal,the relay 21 is open (i.e.,the accelerator switch SW102 is turned on );the main power secpply will pass through the bulb test system to show a green light 53 (a green light to indicate the car moving forwards by stepping on the accelerator).

(3).When the brake pedal is stepped on,the relay 20 is open (i.e., the brake switch SW103 is turned on );the main power supply will pass through the bulb test system to show a red light 54 (a red brake light).

3

The bulb test system will be used to test whether the bulb is normal or not by means of LED on the instrument panel so as to tell the driver which lamp signal outside the car is normal or not. In this system,a cement resistor,a general resistor and transistors are used. The current passing through the bulb will cause the transistors to generate a bias to be applied to the LED;if the LED is not lit up,it indicates that the related bulb is not lit up as well.

The following table is used for farther describing the operation condition of a car:

Car Operation Condition Indicaling Appar

| Car Operation Condition | Signals Indicated | Meaning Indicated |
|---|---|---|
| 1.Car moving reversely | White light 55 and Red flasher Light 51 | car moving reversely (the signals would not Change by stepping on the accelerator or the brake pedal). |
| 2.Stopped on road because of trouble | Red flasher Light 51 | To warn other cars that this |

4

| | Green flasher Light 52 | Considering to step on the brake pedal or accelerator according to certain situation. |
|---|---|---|
| or other causes. | | car is stopped because of being out of order ( This light signal would not be changed by stepping on accelerator or the brake pedal ). |
| 3.The car is moving forwords without stepping on the accelerator or the brake pedal. | Green flasher Light 52 | Considering to step on the brake pedal or accelerator according to certain situation. |
| 4.The car is moving forwards by stepping on the accelerator normally. | Green light 53 | The situation ahead of the car is good and safe for driving for wards. |
| 5.The car speed is reducing quickly (stepping on the brake pedal). | Red light 54 | 1.There is a situation ahead of the car,and a brake has to be put on. 2.There is a downward slope road,a brake has to be put on. |

According to the present invention,the operation conditions are classified into five conditions with five fight signals so as to let the person in a car behind know what situation of a front car would be; then,the car behind can take necessary action before being too late. The aforesaid five light signals are similar to the color code used in the traffic signs or the industrial field,such as green indicating safety,red indicating danger and warning,etc., so as to let the drivers quickly know the situation and take necessary action;in other words,a driver can understand the traffic situation by merely giving a glance at the apparatus without paying mush attention to the front car and the outside matters of the car,and therefore the driver can concentrate his (or her)attention to the driving for safety purpose.

In the present invention, the LEDs of the bulb test system are installed on the instrument panel inside the car, the driver can easily and clearly inspect the function of the various indication lamps without going outside the car; otherwise,an indication lamp becoming out of order might not be discovered.

By using the automatic turn-on/off system, the serviceable life of the car battery can be increased, and the lead pollution in air can be reduced. Further,the mental tension to a driver can also be reduced by means of the present invention because that the headlight are not lit up during the car stopping,and the headlights can automatically be turned off upon stopping beside a crossroad;in that case, the car stopped would not affect the sight of a driver in a car which comes from the opposite direction to turn.

## Claims

1. A car-operation-condition indicating apparatus comprising:

a battery 1, speed pulse Generator kit 5, a reverse gear switch 101,an accelerator switch 102, a brake switch 103, a manual switch 104, a three-throw switch 105, four relays 10,20,21,30 and 31, and a light system; and characterized that said car operation condition indicating apparatus can actuaté said relays by having said switches to be set in on and off conditions so as to selectively provide power supply to various suitable light signal circuits for indicaling a car conditions, such as a white light and a red flasher to indicate a reversing car, a green light to indicate a car being accelerated, a red light to indicate a car being braked, a green flasher to indicate a car moving in neutral gear condition, and a red flasher to indicate a car stopped; and when a car is in reversing or stop condition, the accelerating or stop condition, the accelerating and the braking operations would not affect the lights to indicate car reversing and stop conditions.

2. A car-operation-condition indicating apparatus as claimed in claim 1,wherein the light-indicating system of said apparatus further includes LED 201 to 208, a circuit for said red flasher, a circuit for said green flasher, a circuit for said green light, a circuit for said red light, and a circuit for said white light for a reversing car; and said LED provide a driver with indication to show whether said light circuits are in normal operation condition or not.

3. A car-operation-condition indicating apparatus as claimed in claim 1, wherein said manual switch 104 and said relay 31 are used for selecting an automatic turn-on/off system or a constant turn-on system for the headlight operation of a car.

FIG.1

EP 0 453 601 A1

Start

Speed pulse Generator rotating, car moving

Relay 30 closed  — No

Red flasher light up, car stops

Power switch turned off — No

Yes

Ended

Car moving forward — No → Car moving backwards reversegear switch 101 closed, relay 10 closed, white light and red flasher light up

Yes

Accelerating — Yes → Accelerator switch 102 closed, relay 21 closed, green light up

No

Braking — Yes → Brake switch 103 closed, relay 20 closed, red light up

No

Car moving in neutral gear

Green flasher light up

FIG.2

8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 301 411   (LEAUMONT)<br>* the whole document * | 1 | B 60 Q 1/44<br>B 60 Q 1/26 |
| A | DE-A-1 630 028   (HANNER)<br>* pages 18 - 20; figures 1-8 * | 1 | |
| A | US-A-3 787 808   (KNOPF)<br>* abstract; figures 1-3 * | 1 | |
| A | US-A-3 704 446   (WALTER)<br>* abstract; figures 10-13 * | 1 | |
| A | US-A-4 654 629   (BEZOS)<br>* abstract; figure 15 * | 1,2 | |
| A | EP-A-0 326 668   (STANLEY ELECTRIC CO LTD)<br>* abstract; figures 1, 4 * | 1,2 | |

TECHNICAL FIELDS
SEARCHED (Int. Cl.5)

B 60 Q

The present search report has been drawn up for all claims

| Place of search | Date of completion of search | Examiner |
|---|---|---|
| The Hague | 27 November 90 | ONILLON C.G.A. |